# EUROPEAN PATENT APPLICATION

(11) **EP 1 933 004 A1**
(43) Date of publication of application: **18.06.2008**
(21) Application number: 06125911.5
(22) Date of filing: 12.12.2006
(51) Int. Cl.: E21B 33/14, E21B 36/00, C09K 8/42

(54) **Method of controlling hardening of a compound in a wellbore**

(71) Applicant: SHELL INTERNATIONALE RESEARCH MAATSCHAPPIJ B.V., 2596 HR Den Haag (NL)
(72) Inventor: The designation of the inventor has not yet been filed
(74) Representative: Zeestraten, Albertus W. J.

(57) **Abstract**

A method is disclosed for controlling hardening of a hardenable compound in a volume of said compound located in a wellbore. The compound is adapted to accelerated hardening upon heating of the compound. The method comprises the steps of providing a body of a composition susceptible of performing an exothermic reaction upon initiation of said reaction by a control means, locating said body in the wellbore in the vicinity of said volume of the hardenable compound, and inducing the control means to initiate said exothermic reaction so as to heat the hardenable compound.

## Description

The present invention relates to a method of controlling setting, or hardening, of a hardenable compound in a volume of said compound located in a wellbore.

In established oil and gas exploration and production operations, wellbores generally are provided with one or more cemented casing or liners for purposes such as stabilizing the borehole wall and preventing undesired fluid communication between various earth formation layers. Casings are installed in the wellbore at selected drilling intervals whereby each subsequent casing is lowered through a previously set casing. After lowering each casing to the desired depth, cement is pumped through the casing and the casing shoe at the lower end thereof, into the annular space formed between the casing and the wellbore wall. Typically, a bottom cementing plug is pumped preceding the cement stream, the bottom plug having a hollow core provided with a diaphragm designed to rupture at a selected pressure increase across the plug. After sufficient cement to fill the annular space has been pumped through the casing, a top cementing plug is pumped down the casing using a suitable displacement fluid such as drilling mud. The bottom and top cementing plugs prevent contamination of the cement with drilling mud. When the bottom plug comes to rest on the float collar or the casing shoe at the lower end of the casing, the pressure in the cement increases upon continued pumping, and the diaphragm ruptures. The cement stream then passes through the bottom plug and flows via the lower end of the casing up into the annular space. Pumping is continued until the top cementing plug comes to rest on the bottom cementing plug, at which time substantially all cement has been pumped into the bottom of the wellbore and the annular space. The cement is then allowed to set whereby the casing becomes anchored in the wellbore. Instead of top and bottom cementing plugs, spacer fluids are sometimes used to separate the cement from drilling mud present in the casing.

Generally the cement is provided with a retarding compound to prevent premature setting of the cement. Therefore the setting time may last several days. Such long waiting time is costly as it prevents continued drilling operations until the cement has set. In view thereof, the cement preferably sets as quickly as possible after completion of the cement pumping operation. However, it should in any case be prevented that the cement sets prematurely, i.e. before the required amount of cement has been pumped into the annular space.

It has already been proposed to accelerate setting of the cement by heating the cement once the proper amount of cement has been pumped into the annular space.

US patent application 2005/0274521 A1 discloses an inductive heating tool that is lowered through the casing after pumping of cement into the annular space. The heating tool induces eddy currents in the casing which thereby becomes heated and transmits the generated heat to the cement surrounding the casing. Electric power is supplied to the inductive heating tool via electric cables extending through the casing to a power control unit at surface.

It is a drawback of the known system that lowering and raising of the inductive heating tool through the wellbore is time consuming. Furthermore, it is difficult if not impossible to lower the heating tool through an inclined or horizontal wellbore section to the required depth.

It is therefore an object of the invention to provide an improved method of controlling hardening of a hardenable compound in a wellbore, which method overcomes the drawbacks of the prior art.

In accordance with the invention there is provided a method of controlling hardening of a hardenable compound in a volume of said compound located in a wellbore, the compound being adapted to accelerated hardening upon heating of the compound, the method comprising:
- providing a body of a composition susceptible of performing an exothermic reaction upon initiation of said reaction by a control means, and locating said body in the wellbore in the vicinity of said volume of the hardenable compound; and
- inducing the control means to initiate said exothermic reaction so as to heat the hardenable compound.

With the method of the invention it is achieved that the heat for accelerating hardening of the compound is generated downhole so that there is no need for extending electric cables from surface to the downhole location.

In a preferred embodiment, said volume of the compound is a volume of cement located in an annular space between a casing extending into the wellbore and a wall surrounding the casing, said body of selected composition being connected to the casing. By providing the casing with said body of the selected composition, it is achieved that the body of selected composition is lowered into the wellbore together with the casing, thus reducing the installation time. Also, it is achieved that the body of selected composition can be lowered through inclined or horizontal wellbore sections.

Suitably said exothermic reaction is a thermite reaction. A thermite reaction (also referred to as thermit reaction) is a reaction whereby a first metal is oxidized by the oxide of a second metal lower in the reactivity series of metals than the first metal. In an advantageous embodiment of the invention, the thermite reactants includes Aluminium and an oxide or a sulphide of a metal below Aluminium in the reactivity series of metals, for example oxides of Iron or Nickel.

Most commonly Aluminium is used as the first metal and Iron as the second metal. The reaction is extremely exothermic and the reaction products are Aluminium oxide and free elemental Iron (in case of Aluminium and Iron oxide as the reactants). The reactants are commonly powdered and mixed with a binder to keep the material solid and prevent separation. In principle other metals than Aluminium can be used, however Aluminium is preferred in view of its suitable properties for this reaction. The reactants are stable at lower temperatures, however the reaction starts when the reactants are exposed to sufficient heat. thermite contains its own supply of oxygen, therefore it does not require any external source of oxygen.

Typical characteristics of a thermite reaction with reactants Aluminium and Iron oxide, under stoichiometric conditions, are:

| Reaction | qₘₐₛₛ (kJ kg⁻¹) | ^{T}adiab ^{(°C)} |
|---|---|---|
| Fe₂O₃ + 2Al → Al₂O₃ + 2Fe | 3980 | 3256 |
| 8Al + 3Fe₃O₄ → 4Al₂O₃ + 9Fe | 3670 | 3044 |

wherein:
qₘₐₛₛ is the amount of heat generated per unit mass;
T_{adiab} is the adiabatic temperature reached for initial temperature 0 °C.

The reaction equations indicate that no gas is formed, however some pressurization may occur as a result of heating of possibly included impurities such as air and water, and due to the vapour pressure of the metal at the reaction temperature. If necessary, the temperature can be reduced by using a mixture containing an excess of one of the ingredients to reduce the energy in the system.

Instead of, or in addition to, using a thermite material for generating the necessary heat, compounds forming an intermetallics alloy can be used to perform an exothermic reaction. Intermetallics is the short summarizing designation for intermetallic phases and compounds, i.e. chemical compounds including two or more metals with crystal structures which differ from those of the constituent metals. For example, a composition of powdered Aluminium and Nickel pressed in a standard press tool can be used to form a metallic compact. The composition performs an exothermic reaction upon local heating to a temperature of about 600 °C. Such local heating can be achieved, for example, with a small pyrotechnic heating charge.

Typical characteristics of an intermetallics reaction with reactants Aluminium and Nickel, under stoichiometric conditions, are:

| Intermetallics reaction | qₘₐₛₛ (kJ kg⁻¹) | ^{T}adiab (°C) |
|---|---|---|
| Al + 3Ni → AlNi₃ | 750 | 1313 |
| Al + Ni → AlNi | 1380 | 1639 |
| 3Al + 2Ni → Al₃Ni₂ | 1420 | 1922 |
| 3Al + Ni → Al₃Ni | 1080 | 1450 |

Generally, both thermite compositions and intermetallics compositions have a high temperature of ignition and a high thermal conductivity, therefore an intense source of local heating is required to initiate the reaction. This can be achieved, for example, with a small pellet of a reactive mixture such as Boron and Bismuth (III) oxide that is ignited using a hot wire igniter. Such device could be supplied separately from the main reactants for the exothermic reaction, and be inserted when convenient before use.

It is preferred that the control means for initiating the reaction comprises a fuse. Suitably the fuse is ignited by an impact force exerted to the fuse, by a pressure pulse induced in a fluid column in the wellbore, or by an electromagnetic signal transmitted to the fuse.

Furthermore, to ensure proper setting of the cement upon heating by the thermite reaction, it is preferred that the cement includes a retarding compound which functions to retard setting of the cement and which becomes de-activated by heating of the cement.

The invention will be described hereinafter by way of example in more detail, with reference to the accompanying drawings in which:
Fig. 1 schematically shows a first embodiment of a cementing system for use in the method of the invention during an initial stage of use;
Fig. 2 schematically shows the cementing system of Fig. 1 during a subsequent stage of use;
Fig. 3 schematically shows a second embodiment of a cementing system for use in the method of the invention; and
Fig. 4 schematically shows cross-section 4-4 of Fig. 3.

In the figures like reference numerals relate to like components.

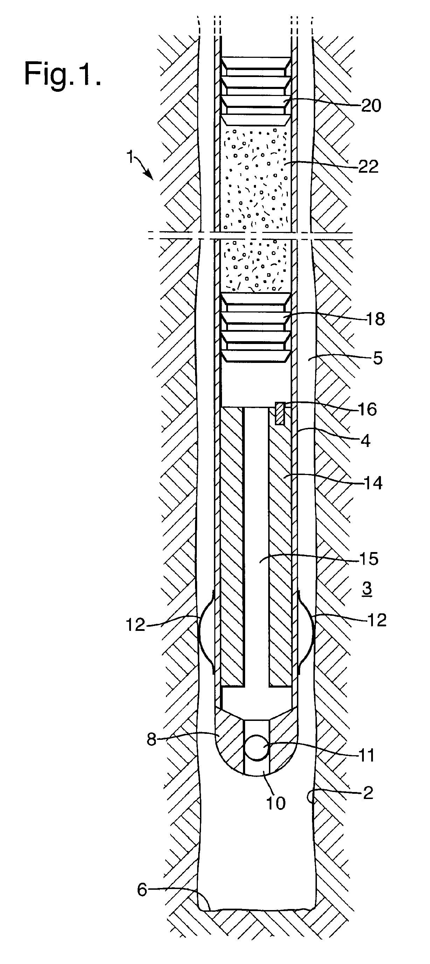

Referring to Fig. 1 there is shown a cementing system 1 for use in a wellbore 2 formed in an earth formation 3. A casing 4 extends from surface into the wellbore 2 to a depth near the bottom 6 of the wellbore 2, whereby an annular space 5 is formed between the casing 4 and the wellbore wall. The casing 4 is at its lower end provided with a casing shoe 8 having a flow channel 10 in which a check valve 11 is incorporated to prevent flow of drilling fluid into the casing 4 during lowering of the casing in the wellbore 2. The outer surface of the casing 4 is provided with one or more casing centralizers 12. The cementing system 1 includes a cylindrical body 14 having a through-passage 15, and containing thermite material capable of performing a thermite reaction. The cylindrical body 14 is arranged in a lower portion of the casing 4, just above the casing shoe 8. The thermite material comprises a mixture of powdered Aluminium and Nickel. A fuse 16 capable of initiating the thermite reaction is arranged at the upper end of the cylindrical body 14 whereby the upper end of the fuse protrudes above the cylindrical body 14. A bottom-cementing plug 18 and a top-cementing plug 20 are located in the casing 4. The bottom plug 18 is provided with a diaphragm (not shown) that ruptures if a pressure difference across the bottom plug 18 exceeds a selected magnitude so that cement can flow in downward direction through the bottom plug 18.

A body of cement 22 is located in the casing 4, between the bottom-cementing plug 18 and the top-cementing plug 20. The cement includes a retarding compound for retarding setting of the cement, the retarding compound being adapted to be de-activated by heating of the cement. Suitable retarding compounds are calcium, sodium, calcium-sodium lignosulphonates and borax. Borax is effective as retarder at temperatures below about 100 °C, and lignosulphanate/borax combinations up to about 180 °C. Thus, the cement should be heated to above these temperatures in order to make such retarding compounds ineffective. Suitably, the cement is heated to a temperature of about 200 °C or higher.

The fuse 16 is adapted to be ignited by a force exerted to the upper end of the fuse 16. The magnitude of said force is corresponds to the impact force which the top cementing plug 20 exerts to the bottom cementing plug 18 when the top cementing plug 20 impacts against the bottom cementing plug 18 during normal use as described hereinafter.

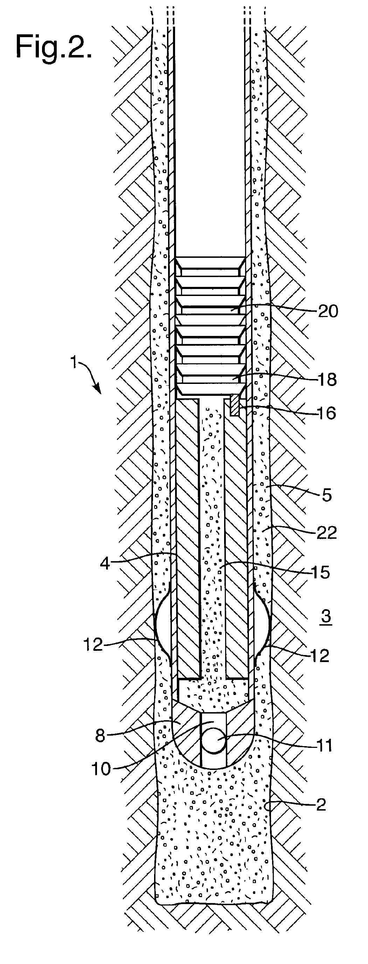

Referring further to Fig. 2 there is shown the cementing system 1 of Fig. 1 after the diaphragm of the bottom cementing plug 18 has ruptured and after the body of cement 22 has been pumped into the annular space 5, and whereby the top cementing plug 20 impacts against the bottom cementing plug 18.

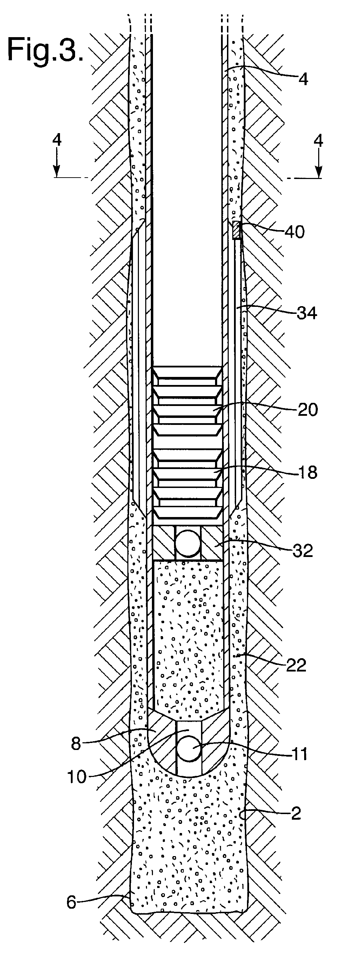

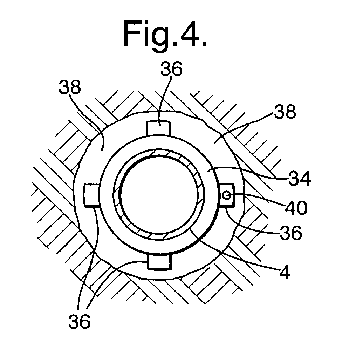

Referring to Figs. 3 and 4 there is shown an alternative cementing system 30 for use in the wellbore 2. The alternative system is largely similar to the system of Fig. 1 except that the thermite material is contained in a cylindrical body 34 arranged around a lower portion of the casing 4, said thermite material comprising a mixture of powdered Aluminium and Nickel. The cylindrical body 34 has four ribs 36 extending in longitudinal direction and equally spaced around the circumference of the body 34. The ribs 36 define flow passages 38 there between for cement, as explained hereinafter. Further, a fuse 40 capable of initiating the thermite reaction is arranged at the upper end of the cylindrical body 34. The fuse 40 is adapted to be ignited by a selected electromagnetic signal transmitted to the fuse from a control system (not shown) at surface. The casing is provided with a conventional float collar 32 a short distance above the casing shoe 8 to prevent flow of drilling fluid into the casing 4 during lowering of the casing in the wellbore 2.

During normal use of the cementing system 1 of Figs. 1 and 2, the casing 4 with the cylindrical body 14 containing the thermite material included therein, is lowered into the wellbore 2 after drilling of a further wellbore section. Upon arriving at the required depth the casing 4 is suspended from surface and the body of cement 22 is pumped in downward direction through the casing 4 together with the bottom and top cementing plugs 18, 20 which prevent mixing of the cement with drilling fluid that may be present in the casing 4. After landing of the bottom plug 18 on the cylindrical body 14, the diaphragm of the bottom cementing plug 18 ruptures upon a pressure increase in the body of cement 22 due to continued pumping of the top cementing plug 20 through the casing 4. The cement thereby flows via the through-passage 15 of the cylindrical body 14 and the flow passage 10 of the casing shoe 8, into the annular space 5. The retarding compound in the cement prevents premature setting of the cement. After substantially all cement has been pumped into the annular space 5, the top cementing plug 20 impacts on the bottom-cementing plug 18. The bottom cementing plug 18 transmits the impact force to the fuse 16 which is thereby ignited.

The ignited fuse 16 initiates the thermite reaction in the cylindrical body 14 whereby the temperature of the thermite material increases to about 200 °C. The generated heat transmits to the cement in the annular space 5 thus de-activating the retarding compound. The cement in the annular space 5 then sets upon deactivation of the retarding compound so that the casing 4 thereby becomes anchored in the wellbore 2.

Normal use of the alternative cementing system 30 shown in Figs. 3 and 4 is largely similar to normal operation of the cementing system of Figs. 1 and 2. During pumping of the cement into the annular space 5, cement passes along the cylindrical body 34 by flowing through the flow passages 38. Further, the fuse 40 is ignited by a selected electromagnetic signal transmitted to the fuse 40 from the control system at surface rather than by an impact force as in the example of Figs. 1 and 2. The alternative cementing system 30 has the advantage that the cylindrical body 34 with the thermite material is in direct contact with the cement in the annular space 5 thus allowing the heat from the thermite reaction to directly transferred from the cylindrical body 34 to the cement.

Instead of connecting the cylindrical body containing the thermite material to the casing at surface and lowering it together with the casing, the cylindrical body can be installed inside the casing after running the casing, for example by running the cylindrical body together with the bottom cementing plug or top cementing plug. Also, the cylindrical body can be lowered into the casing on wireline, slickline or coiled tubing, or can be run by a tractor system. Furthermore, if the casing is to be radially expanded in the wellbore using an expansion tool, the cylindrical body can be run together with the expansion tool.

Instead of igniting the fuse by means of an impact force exerted by the top cementing plug to the bottom cementing plug and transmitted by the bottom cementing plug to the fuse, the fuse can be ignited by increasing the fluid pressure in the casing to a selected pressure. Preferably, the selected fluid pressure is achieved during pressure testing of the casing after the top cementing plug has moved against the bottom-cementing plug.

In summary, the invention as described hereinbefore finds many applications including cementing operations in wellbores whereby a retarder is used that becomes deactivated by increasing the temperature of the cement. The required heat for de-activating the retarder is generated by a staged heat generation process whereby in a first stage a fuse is ignited, and in a second stage an exothermic reaction is initiated by the activated fuse. Depending on the type of application, more than two stages can be applied to start the heat generation process. The heat from the exothermic reaction deactivates the retarder compound present in the cement. It is thereby achieved that the cement remains fluidic until the exothermic reaction is started whereafter the cement sets in a controlled manner. Thus it is achieved that premature setting of the cement is prevented, and that an undesired long waiting time for setting of the cement is avoided.

In a further modification of the method of the invention, said compound is an elastomer that vulcanizes at increased speed upon heating. Such elastomer is, for example, included in an elastomer band around a casing or a liner in a wellbore. Upon start of the exothermic reaction in the body of the selected composition, the elastomer gets heated and thereby vulcanizes in-situ at accelerated speed.

## Claims

1. A method of controlling hardening of a hardenable compound in a volume of said compound located in a wellbore, the compound being adapted to accelerated hardening upon heating of the compound, the method comprising:
- providing a body of a composition susceptible of performing an exothermic reaction upon initiation of said reaction by a control means, and locating said body in the wellbore in the vicinity of said volume of the hardenable compound; and
- inducing the control means to initiate said exothermic reaction so as to heat the hardenable compound.

2. The method of claim 1, wherein the hardenable compound includes a retarder for retarding hardening of the compound, the retarder being adapted to be de-activated by heating of the hardenable compound.

3. The method of claim 1 or 2, wherein said composition is susceptible of performing a thermite reaction upon initiation of the reaction by the control means.

4. The method of claim 3, wherein said composition includes Aluminium and an oxide or a sulphide of a metal below Aluminium in the reactivity series of metals.

5. The method of claim 4, wherein said selected metal is Iron or Nickel.

6. The method of any one of claims 1-5, wherein said volume of the compound is a volume of cement located in an annular space between a casing extending into the wellbore and a wall surrounding the casing, and wherein said body of the selected composition is connected to the casing.

7. The method of claim 6, wherein said wall surrounding the casing is the wall of the wellbore or another casing arranged in the wellbore.

8. The method of claim 6 or 7, wherein the control means comprises a fuse adapted to be ignited by one of a pressure pulse in a body of fluid present in the wellbore, an impact force exerted to the fuse, and an electromagnetic signal transmitted to the fuse.

9. The method of claim 8, wherein the fuse is ignited by an impact force exerted to the fuse by a cementing plug that is moved through the casing during pumping of the volume cement into the annular space.

10. The method of claim 9, wherein said cementing plug trails the volume of cement during pumping of the volume of cement into the annular space.

11. The method of any one of claims 6-10, wherein said body of the composition is arranged inside the casing and has a through-opening for passage of cement during pumping of the volume of cement into the annular space.

12. The method substantially as described hereinbefore with reference to the accompanying drawings.
